(19) Europäisches Patentamt
European Patent Office
Office européen des brevets

(11) Veröffentlichungsnummer: **0 060 502**
**A1**

# (12) EUROPÄISCHE PATENTANMELDUNG

(21) Anmeldenummer: **82101896.7**

(22) Anmeldetag: **10.03.82**

(51) Int. Cl.³: **C 08 F 8/34**, C 08 F 8/28

(30) Priorität: **14.03.81 DE 3109844**

(43) Veröffentlichungstag der Anmeldung: **22.09.82**
**Patentblatt 82/38**

(84) Benannte Vertragsstaaten: **DE FR GB IT**

(71) Anmelder: **HOECHST AKTIENGESELLSCHAFT,**
**Postfach 80 03 20, D-6230 Frankfurt/Main 80 (DE)**

(72) Erfinder: **Engelhardt, Friedrich, Dr., Hünfelder Strasse 20, D-6000 Frankfurt am Main 61 (DE)**
Erfinder: **Kleber, Rolf, Dr., Am Trieb 41, D-6078 Neu-Isenburg (DE)**

## (54) Modifizierter Polyvinylalkohol und dessen Verwendung als Schlichtemittel.

(57) Polyvinylalkohol modifiziert durch Umsetzung mit Formaldehyd und Amidosulfonsäure bei einem pH-Wert von 4 bis 7, der durch Zugabe eines organischen Amins eingestellt wird. Dieser modifizierte Polyvinylalkohol eignet sich als Schlichtemittel für Garne.

EP 0 060 502 A1

ACTORUM AG

0060502

HOECHST AKTIENGESELLSCHAT HOE 81/F 049 Dr.OT/Pa

Modifizierter Polyvinylalkohol und dessen Verwendung als Schlichtemittel.

Der Einsatz von Polyvinylalkohol zum Schlichten von Garnen ist gut bekannt (C.A. Finch "Polyvinylalkohol-propertis and applications", Londen 1973, S. 233 ff). Wie dort erwähnt, werden voll verseifte Typen von Polyvinylalkohol, d.h. Polyvinylacetate, die bis auf einen sehr geringen Rest-acetyl-Gehalt verseift wurden, zum Schlichten hydrophiler Garne wie z.B. Baumwolle, Leinen oder Viscose verwendet. Teilverseifte Typen nimmt man zum Schlichten von Garnen aus Polyamid-, Polyester- und Polyacrylfasern. Polyvinylalkohol zeigt zwar gute Schlichteeffekte, d.h. gute Laufeigenschaften beim Abweben, doch besteht das Problem, daß übertrocknete Ketten sich beim Schlichten schlecht auswaschen lassen. Eine zu geringe Löslichkeit in Wasser zeigt sich auch bei der alkalischen Behandlung von Geweben, die mit Polyvinylalkohol geschlichtet wurden. Das Alkali erhöht hier sehr stark die Kristallinität und führt zu einem in Wasser nur wenig löslichen Produkt, so daß mit Polyvinylalkohol geschlichtete Gewebe in der Praxis vor einer alkalischen Weiterbehandlung zunächst mit heißem Wasser entschlichtet werden müssen.

Für das Schlichten und Entschlichten stellt sich daher die Aufgabe, Schlichtemittel zu entwickeln, die die anerkannt positiven Eigenschaften des Polyvinylalkohols aufweisen, gleichzeitig aber auch im stark alkalischen Medium gut löslich sind.

Alkalilösliche Polyvinylalkohole werden bereits in der US-PS 4 013 805 beschrieben. Die Löslichkeit wird hier erreicht durch Copolymerisation mit alkalilöslichen Comonomeren, z.B. Acrylsäure, Maleinsäure oder Fumarsäure. Die Herstellung dieser Produkte erfordert aber eine aufwendige Copolymerisation von Vinylacetat und Acrylsäure im Vergleich zur Homopolymerisation von Vinylacetat allein.

Einfacher gestaltet sich die Herstellung von alkalilöslichem Polyvinylalkohol, wenn man diesen Polyvinylalkohol chemisch modifiziert. So beschreibt die DE-PS 729 774 eine Modifizierung von Polyvinylalkohol durch Umsetzung mit Glyoxylsäure oder Benzaldehydcarbonsäuren. Diese Art der Modifizierung ist jedoch sehr zeitaufwendig. Darüberhinaus sind die benutzten Reagentien relativ schlecht zugänglich. Weitere angeblich alkalilösliche Derivate von Polyvinylalkohol sind in der US-PS 2 434 145 beschrieben. Sie werden erhalten durch Umsetzung mit Chloressigsäure. Eine Nacharbeitung dieser Literatur ergab aber nur gänzlich unlösliche Produkte.

Es wurde nun gefunden, daß man Polyvinylalkohol-Derivate erhält, die gut in Alkali löslich sind, wenn man den Polyvinylalkohol mit Formaldehyd und Amidosulfonsäure modifiziert.

Gegenstand der Erfindung ist somit modifizierter Polyvinylalkohol, der hergestellt wird durch Umsetzung von Polyvinylalkohol mit Formaldehyd und Amidosulfonsäure bei einem pH-Wert von 4 bis 7, der durch Zugabe eines organischen Amins eingestellt wird.

Als Ausgangsprodukt für die Reaktion dient teil- oder vollverseifter Polyvinylalkohol beliebiger Art. Die Viskositäten in 4 %iger wäßriger Lösung bei 20° C liegen dabei für die teilverseiften Typen zwischen 4 und 40 mPas und für die vollverseiften Typen zwischen 4 und 66 mPas. Der Hydrolysegrad, d.h. der Verseifungsgrad, liegt zwischen 80 und 99,7 Mol-%. Zur Herstellung gut löslicher Produkte setzt man diesen Polyvinylalkohol um mit 5 bis 25 Gew.% eines Gemischs aus Formaldehyd und Amidosulfonsäure, bezogen auf das Gewicht des Polyvinylalkohols. Das Mol-Verhältnis von Formaldehyd zu Amidosulfonsäure untereinander beträgt zwischen 0,3:1 und 1:0,3.

Die Reaktion erfolgt in wäßriger Lösung bei einer Konzentration aller drei Komponenten von ca. 10 bis 50 Gew.%. Vorteilhafterweise geht man so vor, daß man den Formaldehyd als handelsübliche Formalinlösung vorlegt und darin den Polyvinylalkohol und die Amidosulfonsäure löst. Diese Mischung wird dann während ca. 30 Minuten bis 3 Stunden auf höhere Temperaturen, vorteilhaft auf ca. 80 bis 100°C erwämt. Von besonderer Bedeutung ist hierbei, daß durch Zugabe eines flüssigen organischen Amins ein pH-Wert von 4 bis 7, insbesondere 5,5 bis 6,5 eingestellt wird. Dieses Amin wird entweder nach Beendigung der Reaktion oder bevorzugt während der Reaktion zugegeben. Als Amine kommen vorzugsweise Verbindungen der Formel

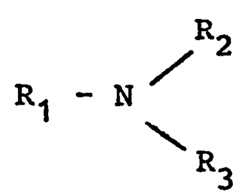

in Frage, wobei $R_1$, $C_1$-$C_4$-Alkyl, $C_3$-$C_4$-Hydroxialkyl, Benzyl, Phenyl oder Cyclohexyl, $R_2$ die gleiche Bedeutung wie $R_1$ hat und zusätzlich Wasserstoff und $R_3$ Wasserstoff, $C_1$-$C_4$-Alkyl oder $C_3$-$C_4$-Hydroxialkyl oder $R_2$ und $R_3$ zusammen mit dem Stickstoffatom einen Morpholinring bedeuten. Beispiele für solche Amine sind mono-, di- oder tri-Ethanolamin, Benzylamin, Dibenzylamin, ß-Oxyethylmorpholin, Triäthylamin, Triiso-propanolamin, di-ß-Oxethyl-monomethylamin, di-Cyclohexylamin, Methylanilin, Ethylanilin, Anilin, Diphenylamin, Diäthylamin oder Dibutylamin.

Nach Beendigung der Reaktion wird das Wasser durch Destillation entfernt und man erhält den modifizierten Polyvinylalkohol als Pulver oder Granulat. Man kann aber auch auf die Entfernung des Wassers verzichten und die angefallene wäßrige Lösung direkt zum Schlichten verwenden.

Die so erhaltenen modifizierten Polyvinylalkohole zeigen die bekannten günstigen Eigenschaften üblicher, nicht modifizierter Polyvinylalkohole, wie geringe Klimaabhängigkeit beim Weben, hohe Klebkraft und geringe Wasserempfindlichkeit auf den geschlicheten Garnen. Überraschend ist darüber hinaus die gute Löslichkeit dieser modifizierten Polyvinylalkohole im alkalischen Medium. Während Filme, hergestellt aus teil- oder vollverseiftem Polyvinylalkohol sich überhaupt nicht in wäßrigen Flotten lösen, die zwischen 10 und 300 g/l Natrium- oder Kaliumhydroxid enthalten, lösen sich Filme aus dem oben beschriebenen modifizierten Polyvinylalkohol sehr gut sowohl in Wasser als auch in den beschriebenen alkalischen Flotten bei Temperaturen zwischen 0 und 100°C.

Das Schlichten mit dem erfindunsgemäß modifizierten Polyvinylalkohol erfolgt in üblicher Weise, wobei Additive wie Schlichtefett, Weichmacher, sonstige Schlichtemittel, speziell Stärken und modifizierte Stärkederivate zusätzlich ins Schlichtebad gegeben werden können. Der modifizierte Polyvinylalkohol eignet sich zum Schlichten von Synthesegarnen, so beispielsweise für Filamente und Stapelfasern aus Polyamid, Polyester und Polyacrylnitril.
Besonders eignet sich der modifizierte Polyvinylalkohol jedoch zum Schlichten von Garnen aus reiner Baumwolle oder aus Baumwolle/Polyester-Gemischen. Die Konzentration des modifizierten Polyvinylalkohols in der Schlichteflotte beträgt in allen Fällen ca. 6 bis 8 Gew. % und die Auflage an Schlichtemittel auf dem Garn beträgt ca. 8 bis 14 Gew.%.

**Beispiel 1**

100 g Polyvinylalkohol (Verseifungsgrad 88 %, Viskosität 4 mPas gemessen in 4 %iger wäßriger Lösung bei 20°C) werden mit 5 g $NH_2SO_3H$ und 5 g einer 37 %igen Formalinlösung unter Rühren in 300 g Wasser bei 80°C gelöst. Die Mischung wird auf 90-95°C erwärmt und nach 1 Stunde werden bei dieser Temperatur 10 g Triethanolamin zugegeben, wobei sich ein pH-Wert von 6 einstellt. Nach Beendigung der Reaktion wird der hochviskosen Lösung das Wasser am Dünnschichtverdampfer entzogen und man erhält ein Granulat.

Beispiel 2

In der gleichen Weise wie in Beispiel 1 beschrieben, werden 100 g Polyvinylalkohol (Verseifungsgrad 98 %; Viskosität 56m Pas in 4 %iger Lösung mit 10 g $NH_2SO_3H$, 10 g einer 37% igen Formalinlösung und 20 g Diethylaminoethanol in 400 g Wasser umgesetzt. Der pH-Wert der hochviskosen Lösung liegt nach beendeter Reaktion bei 6,5. Durch Zugabe von Wasser wird ein Feststoffgehalt von 40 % eingestellt.
In der gleichen Weise wie in Beispiel 1 beschrieben wurden folgende Produkte umgesetzt:

Beispiel 3

100 g Polyvinylalkohol (Verseifungsgrad 88 %; Viskosität 18 mPas)
15 g $NH_2SO_3H$
15 g Formalin (37 %ige wäßrige Lösung)
pH-Wert mit ß-Oxethylmorpholin eingestellt auf 6-6,5

Beispiel 4

100 g Polyvinylalkohol (Verseifungsgrad 88 %; Viskosität 40 mPas)
5 g $NH_2SO_3H$
7 g Formalin (37 %ige wäßrige Lösung)
pH-Wert mit Diethanolamin eingestellt auf 6-6,5

Beispiel 5

100 g Polyvinylalkohol (Verseifungsgrad 100 %, Viskosität 66 mPas)
25 g Formalin (37 %ige wäßrige Lösung)
ph-Wert mit Ethanolamin eingestellt auf 6-65,

Die nach Beispiel 1 bis 5 erhaltenen Produkte wurden in Wasser gelöst und daraus Filme gegossen. In gleicher Weise wurden aus den nicht-modifizierten Polyvinylalkoholen, die in den Beispielen 1 bis 5 als Ausgangsprodukt dienen, Filme hergestellt. Alle Filme lösten sich gut in Wasser von 60°C. In einer 6 %igen wäßrigen NaOH- bzw. KOH-Lösung von 60°C lösten sich innerhalb von 10-60 Sekunden die modifizierten Polyvinylalkohole der Beispiele 1 bis 5. Die nicht-modifizierten Polyvinylalkohole waren in diesen Lösungen unlöslich.

Die Wasseraufnahme der Filme bei 22°C und 85 % relativer Feuchte betrug 6 - 8 % für die nicht-modifizierten und 14-17 % für die modifizierten Polyvinylalkohole. Zum Vergleich wurde die Wasseraufnahme eines Ammoniumpolyacrylats bestimmt, das in der Praxis nicht allein eingesetzt werden kann, da es zum Abschmieren neigt. Die Wasseraufnahme betrug hier 35 %.

Ein Polyester/Baumwoll-Garn 67:33, Nm 50/1 wird mit einer Schlichteflotte bei 85°C geschlichtet. Die Flotten enthalten 8 % der unten angegebenen Schlichtemittel und 0,2 % eines Weichmachers (Fettsäurekondensationsprodukt), die Auflage an Schlichtemittel auf dem Garn beträgt ca. 12 %. Als Schlichtemittel werden folgende Produkte eingesetzt:

a) nicht-modifizierter Polyvinylalkohol aus Beispiel 1
b) nicht-modifizierter Polyvinylalkohol aus Beispiel 2
c) modifizierter Polyvinylalkohol gemäß Beispiel 1
d) modifizierter Polyvinylalkohol gemäß Beispiel 2
e) modifizierter Polyvinylalkohol gemäß Beispiel 3

Die Webeigenschaften der mit den Produkten a) - e) geschlichteten Garne sind als gleichgut zu bezeichnen. Nach dem Entschlichten mit einer alkalischen Flotte sind jedoch nur die mit den Produkten c) - e) geschlichteten Garne frei von Rückständen an Schlichtemittel.

Patentansprüche:

1. Modifizierter Polyvinylalkohol erhalten durch Umsetzung von Polyvinylalkohol mit Formaldehyd und Amidosulfonsäure bei einem pH-Wert von 4 bis 7, der durch Zugabe eines organischen Amins eingestellt wird.

2. Modifizierter Polyvinylalkohol nach Anspruch 1 erhalten durch Umsetzung mit 5 bis 25 Gew. % eines Gemischs aus Amidosulfonsäure und Formaldehyd, bezogen auf das Gewicht des Polyvinylalkohols, wobei das Mol-Verhältnis von Formaldehyd zu Amidosulfonsäure von 0,3:1 bis 1:0,3 beträgt.

3. Verwendung der modifizierten Polyvinylalkohole nach Anspruch 1 und 2 als Schlichtemittel für Garne.

Europäisches Patentamt

**EUROPÄISCHER RECHERCHENBERICHT**

0060502

Nummer der Anmeldung

EP 82 10 1896

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-C- 643 650 (I.G. FARBENINDUSTRIE)<br>* Anspruch; Seite 1, Spalte 2, Zeilen 40-49 *<br>--- | 1-3 | C 08 F 8/34<br>C 08 F 8/28 |
| A | US-A-2 423 572 (D.W. WOODWARD)<br>* Anspruch 1; Spalte 2, Zeile 46 - Spalte 3, Zeile 17; Spalte 4, Zeilen 44-60 *<br>--- | 1,2 | |
| A | DE-C- 832 290 (HOECHST)<br>* Anspruch 1 *<br>----- | 1 | |
| | | | RECHERCHIERTE SACHGEBIETE (Int. Cl. 3) |
| | | | C 08 F 8/34<br>C 08 F 8/36<br>C 08 F 8/28 |

Der vorliegende Recherchenbericht wurde für alle Patentansprüche erstellt.

| Recherchenort | Abschlußdatum der Recherche | Prüfer |
|---|---|---|
| DEN HAAG | 29-06-1982 | PERMENTIER W.A. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82